# EUROPEAN PATENT APPLICATION

(11) **EP 3 023 190 A1**
(43) Date of publication of application: **25.05.2016**
(21) Application number: 14194596.4
(22) Date of filing: 24.11.2014
(51) Int. Cl.: B23K 37/02, B23K 26/08, B23Q 1/01, B23Q 1/62, B23K 26/38, B26F 3/00

(54) **Cutting head device**

(71) Applicant: Bystronic Laser AG, 3362 Niederönz (CH)
(72) Inventor: Bossoni, Sergio, 8048 Zürich (CH); Steinlin, Markus, 8032 Zürich (CH)
(74) Representative: Patentbüro Paul Rosenich AG

(57) **Abstract**

The invention relates to a cutting head device (1) for a machine tool (2) for machining work pieces by motion of the cutting head (3) relative to the work piece (4). It is mainly relevant for fiber lasers and allows for redundant machining at high speed and high quality machining.

## Description

The invention relates to a cutting head device for a machine tool for machining work pieces by motion of the cutting head relative to the work piece.

Such a cutting head device is disclosed in the EP1366846B1 which is seen as closest prior art.

In laser cutting installations and other machining operations involving large plate-like work pieces, it is common to support the work piece on a worktable and to effect relative movement between the cutting head and the work piece.

Although the worktable can be moved relative to the machining head, generally it is prefered to move only the machining tool on a support located above the work piece relative to the work piece in both X and Y axes of said work piece and computer controlled. Typically, the support for the machining head is a bridge which extends between side rails and on which it is movable relative to the work piece on an X-axis. Moreover, the machining head is generally supported on the bridge so that it is movable along the length of the bridge (Y-axis) thus providing relative motion of the machining head in both X and Y directions.

As will be readily appreciated, the bridge is a substantial structure with a relatively large mass so that motion of the bridge in the X- axis requires substantial power to overcome the inertia, to effect the continued motion and to stop or reduce speed of a motion. The power and inertia for movement in the transverse direction is much less because the machining head is lighter and it moves along the length (Y-axis) of the bridge. This definition deviates from the definition in the EP1366846B1. There the X- and Y-axis are defined in the opposite direction.

Because of the large mass and the need to start and stop the motion of the bridge, the cutting action of small intricate contours may not be as precise as desirable, and the costs and wear of the drive system for the bridge can adversely affect the economics of the types of parts to be processed in a particular machine tool installation are small and of intricate configuration.

Accordingly, it was always an object of the prior art to provide a machine tool in which the motion required of a substantial bridge or similar support may be substantially reduced. All prior art constructions try to minimize the movement of the bridge as such. A zero-movement of the bridge was hence in the focus of all prior solutions and seen as one target of all prior Art improvements.

The closest prior art EP1366846B1 postulates therefore in column 5 (underline added):
"The software will normally evaluate all cuts within the numeric control program including absolute position, relative position to each other and overall size of each part. The overall size will determine which cuts will fit within the working range of the small axis motion; the relative position of the contours to each other will define how many consecutive parts can be cut with the small axis motion without moving the entire bridge, and the absolute position defines the base position for the bridge at the start of any given action.

With this information in hand, the machine control positions both axes during the movement to the next cut. The bridge will be placed so that the maximum possible numbers of cuts can be reached by the small axis motion without moving the bridge. When the program determines that the contour of a part falls outside this envelope, the bridge moves to a new base position for the next series of cuts utilizing only the motion of the small axis housing. Thus, the software will optimize the process by minimizing the movements of the bridge and the cutting required by motion of the bridge and by concurrently maximizing the cutting which is accomplished by the motion of the small axis housing."

If a contour is of a length in X-direction, which exceeds the working range of the motion for the small axis housing, there were several possibilities seen according to the closest prior art (column 5 line 33 - underlining added):
"1. The contour of the part can be cut completely by using the motion of the bridge.
2. The large contour can be split into several smaller segments which can be cut by use of the small axis motion with the bridge being periodically moved. Obviously another potential solution is to reorient the parts on the workpiece so that the length in the axis is within the range of motion of the small axis housing as indicated previously."

From this follows, what was stated above, namely that the closest prior art philosophy provides a maximum dead time of the bridge. At most the bridge is moved periodically from one position to another in order to then allow the smaller redundant axis to cut the work piece from the respective position of the bridge as a base position.

However this periodical stop and go of the bridge creates at least as many periodical jerks which in turn may shake the whole cutting machine and do eventually add to problems of machining small intrinsic contours.

It is to be noted that the term "jerk" refers on the one hand to transfer of energy in the sense of a quake. This will be also referred to by the term excitation. On the other hand it is the second derivative of the speed after the time. This as such will create a quake only if and to the extent masses are involved.

An efficient way in the prior art to avoid this is to start cutting the work piece only after the bridge stopped completely. The complete stop before starting the cutting process however reduces the productivity of such cutting machine significantly.

Further the closest prior art uses filter to control the different axes. Filters are normally combined with some kind of contour interpreter because they don't work properly with just any general geometry. Some prior art shows that contour interpreter have different options among them to reduce the speed of the cutting head or a higher band width for the splitting of the axes. Some art refers to contour interpreter as geometry interpreter. They also check, if by any movement the action radius of the small axes would be crossed

Filter however do not necessarily stop the movement of the bridge but on the other hand they do not allow for an optimized ratio of movements and accelerations of the small and large axes in view of optimizing the work quality at high working speed.. Further filters do not allow to define a worst case scenario. Filter hence need more observation work and/or allow a high excitation of the big axes.

This analyses shows the basic problem of the prior art: While it was understood that the movement of the bridge is difficult and energy consuming and related to bad cutting results, the method offered by this closest prior art creates in itself periodical jerks or reduces the productivity significantly. The invention takes for that reason the task to find a solution to solve this problem.

It will be appreciated that the inventive idea to (constantly) move the bridge instead of minimizing its movement deviates heavily from the prior art teaching and is not suggested at all.

However only when the bridge is moved as constantly as possible - that means at minimized jerks - the problems can be solved. So it is - according to the invention - not to minimize the motion of the bridge, but to have it principally in motion but at minimized jerks.

This leads to surprising effects namely even higher cutting speeds (processing time of work pieces) and higher quality as vibrations generated by jerks are reduced.

The reduction of periodical stops and goes for the bridge also provides a longer-living installation and reduces the cost of operation by wear reduction.Especially when the inventive control considers the minimization of the sum of acceleration and jerk impacts.

It was also an object of prior art constructions to provide such a machine tool in which the quality of the machining of small intricate contours is improved. It was believed that such small contours could not be produced properly by the movement of the bridge and the cutting head relative to the bridge alone so that additional axis have been added (redundant axes) as mentioned above in the example of the closest prior art.

However it is an object of the invention to improve prior art constructions.

Another object of the invention is to provide a cutting head device which can be fabricated readily and which can be used to substitute existing cutting head devices and which is relatively simple to operate.

Further prior art is described in column 1 of said EP1366846B1. Said description and information is incorporated herein by reference.

A cutting head device in the sense of the invention is that piece of a cutting device from which the cutting forces are guided to the work piece to be cut. It contains a cutting head and all elements supporting this cutting head and guides for guiding the cutting energy.

As dominant technologies in the sense of the invention laser cutting and water jet cutting are to be considered but also other cutting technologies are covered by the invention and the term cutting head is therefore to be understood in a broad sense.

Further the invention is basically drawn on the cutting head and its supporting elements as such, as it has to be understood that the inventive cutting head device may form part of an entirely new cutting machine as such but might also be a substitute for an existing cutting head on an existing cutting machine in order to improve said existing cutting machine over its prior appearance and operation.

The invention refers to the term "substitution" in the sense that used machines are upgraded by eliminating existing other cutting heads and mounting the inventive cutting head or amending the concept of existing cutting machine designs by exchanging existing cutting head designs by the inventive cutting head.

The invention takes advantage of the following existing elements of the prior art namely:
(a) A worktable having X and Y axes and adapted to support a work piece thereon;
   In the sense of the invention the directions are defined according to the main function of cutting machines namely: The X-axis is the direction along which all moveable machine parts of a cutting machine are moved in order to make a cut, whereas the Y-axis is perpendicular to said X-axis. If a cut is performed along the Y-axis then not all moveable parts of said cutting machine are necessarily moved.
(b) A support extending transversely above said worktable in the Y-axis and movable along the X-axis of said worktable; said support will be referred to also as a bridge, as it in most cases will extend (bridge) from one side of the worktable to the other side of the worktable in the Y-direction.
(c) First machining tool mounting means mountable movably on said support for movement along said support or bridge in said Y-axis;
(d) second machining tool mounting means movably mounted on said first machining tool mounting means for movement in a Z-axis relative to said support and relative to said second machining tool mounting means.
   Said Z-axis is an axis perpendicular to said X- and Y-axes and relates to the up and down movement of the cutting head relative to a work piece.
(e) Third machining tool mounting means moveably mounted on said second machining tool mounting means for movement in a U-axis relative to said second machining tool mounting means and said support respectively; said movement in the U-axis has a shorter range than the movement in the X-axis; The U-axis is parallel or in line to or with said X-axis and perpendicular to said Y-axis and said Z-axis. However the maximum range of movement for the third machining tool mounting means is for economic reasons shorter than the range of the support in said X-axis. It is to be understood that the longer the working range of the U-axis would be the more weight the third machining tool mounting means would have - resulting in a bad dynamic. On the other hand a shorter U-axis would need a more dynamic X-axis for the same productivity.
(f) A cutting head mounted on said third machining tool mounting means and comprising a nozzle for an energy cutting ray and/or jet stream. Under a "nozzle for an energy cutting ray and/or jet stream" the invention refers to any devices for guiding gases and/or liquids and/or particles including particles of the physical atomic structure and/or physical energy waves (e.g. electromagnetic waves - like light or x-rays - or sound waves - like ultrasound - or the like). That typically includes but is not limited to laser cutters or water jet cutters.
   It has to be noted that the above order of mounting the mounting means b)-f) in relationship to each other is one of the inventive elements and as such not part of the prior art. Claim 2 however defines as an alternative also a slightly different device which however must not - for clarity reasons - directly support a third machining tool mounting means in order to support a U-axis.
   The advantage of the inventive order of the machine tool mounting means lies in the observation of the inventors that the up and down movement (Z-axis) is less critical in view of work precision of a cut. For that reason the new order of the mounting means leads to a cutting head who's dynamic is greater in the U (X) axis under the same drive-energy-consumption as the U-axis movement does not need to accelerate the weight of the Z-axis mounting means. The lower inertia of the U axis reduces the excitation forces of the X axis. This effect however symbiotically adds to the effect generated by the novel computer control means mentioned under m) below.
(g) First drive means for said support to move said support in said X-axis over said worktable (5).
   "Drive means" in the sense of the invention refer to any electrically, magnetically or pneumatically controllable drives (motors) which allow at least a controlled movement of the moveable element in the direction of the axis in which said element is moveable.
(h) Second drive means for said first machining tool mounting means to move said first machining tool mounting means in said Y-axis along said support;
(i) Third drive means for moving said second machining tool mounting means in said Z-axis relative to said first machining tool mounting means;
(j) fourth drive means for moving said third machining tool mounting means in said U-axis relative to said second machining tool mounting means;
(k) wherein said four drives are of such dimensions, that the first drive means allows for relatively slow constant and jerk-minimized movement of said support (bridge) in said preferably said X-axis (first drive means) and preferably also the second drive means (Y-axis) allow for relatively fast (high dynamic) and jerk minimized movement of said first machine tool mounting means in said X- and Y-axis and the third drive means allow for relatively faster (higher dynamic) and preferably jerk minimized movement of said second machine tool mounting means in said Z-axis and the fourth drive means allow for relatively faster (high dynamic) and preferably jerk minimized movement of said third machine tool mounting means in said U-axis.

In the sense of the invention "jerk minimized" refer to a drive control with a computer program which is adapted to calculate the jerk (second derivative of the speed). "Preferably" here means that variants without jerk minimized control fall also under the following feature. The jerk-minimized movement of the first drive means could also be realized as a velocity, acceleration and/or jerk and/or higher derivatives minimized movement with modified dimensions of actuator forces, masses and ranges - especially the range of the small axis.

It is obvious that movements of the X-axis and the U-axis add to the cutting speed, if both movements are in the same direction and reduces the cutting speed, when the U-axis moves into the opposite direction with respect to the movement of the X-axis. In any case as the jerk minimization is in the focus of the inventive drives and control said moves are controlled in relation to each other. As jerks produced by the U-axis are significantly smaller due to its smaller inertia of the third machine tool mounting means, the jerk-minimization for the X-axis is more important; which influences the program of the drive-control.

Said program may - in a further development - even consider that jerk excitations produced by one of both axes might be compensated by jerk excitations produced by the other of said axes in the opposite direction.

As already mentioned: Contrary to the prior art and understanding, the invention does postulate that a movement of the X-axis as such is not detrimental to high precision of the cuts - even for small dimension of the geometrical figures to be cut. However such movement should be "constant" or "smooth" and hence jerk-minimized. That understood makes it understandable that the software of the machine control according to the invention will basically not look into restrictions of working range or speed of the individual axis alone but into the second derivative of the speed after the time.

It has to be noted that the combination of the features of group k) is - in combination with the features of b)-f) novel and inventive over the prior art as it symbiotically adds a further improvement over the art: The improved dynamic (see above last paragraph under f) combines now with the reduction of jerks, which especially in the X(U) and Y-axes are -according to the analyzes of the inventors - the most critical triggers of precision failures in cutting sheet materials. To control cutting heads of cutting machines in view of jerk-minimization as such, might be within the existing skills of a machine engineer, but the above explained order of different dynamics of the different axes together with the definition of the jerk minimization in relationship to each other is one of the inventive elements and as such not part of the prior art. This holds also true for the suggestion of the invention that the X-axis (Main axis) should basically move and not rest.

For better understanding one may think of a normal sized work piece of square format which has four small contours to be cut, said contours are situated in the four corners of the work piece. All four contours as such are so small that they lie within the working range of the U-axis - with respect to movements of the cutting head in the main X-axis.

Current systems would detect, that for the individual cuts of the individual contours a movement of the X-axis is not necessary. The paradigm to leave the X-axis (the heavy bridge) resting as much as possible leads the machines of prior art with redundant axis to do the following: Cut out the small contours in the first corners by using only the Y and U-axes, then move the bridge to the other corners and then cut the two other contours again by utilizing only the Y-axis and the U-axis. In between those cuts the x-axis would shift the bridge at maximum speed from the one side to the other side of the work piece. The required speeding up on the one side and stopping (braking) of the bridge on the respective other side may create heavy jerks.

The invention however would not follow this paradigm and would move the X-axis although it would not be needed for cutting the first contours in the first corners. This move would be jerk minimized - that means very smoothly, eventually with continuing acceleration whereas the U-axis and Y-axis would move the cutting head to the extent further necessary to do the cuts.

As a result the Y-axis would eventually be already at full speed when the machine would start to move the bridge from the lower corners of the work piece to the upper corners of the work piece. Further the distance to be travelled by the bridge between the two cutting sequences would be smaller than in the first place. In the region of the upper corners of the work piece the braking actions of the bridge or X-axis respectively would be about the same as the acceleration on the other side of the work piece in the beginning. Overall the whole machine and process would have less jerks and a higher operational speed resulting in a higher productivity at a better quality.

The above described cutting head together with its supporting and mounting elements might be inventive over the art alone and patentable as such; however in order to fully and optimized improve the new cutting head device over the prior art, the invention further improves the cutting head by
(I) a transport conduit for guiding the energy cutting ray and/or jet stream from the ray and/or jet source to said nozzle; said transport conduit being guided in a flexible transport conduit guiding means, wherein the flexibility of said conduit guiding means is restricted to one flexibility plane. Transport conduits as such are well known from prior art; however due to the flexibility of the conduits (often optical fibers and/or flexible gas tubes) prior art overlooked the effect of such flexibility on the performance of the cutting head when in high speed movement at a high dynamic cutting situation: The inventors detected that reactive forces of said conduits add to the jerk excitations. However conduits - as in prior art used - may bend in multiple directions. This leads to undefined influences on the jerk-excitation. -. Undefined smaller or bigger shaking motions or vibrations may occur and influence the ease of the nozzle, which in turn reduce the work precision. Further it leads to undefined wear of said conduits and hence the conduits need to be very flexible and wear resistant in all individual directions which is difficult and expensive to achieve.
   As it can be understood from these observations the invention which restricts the movement of the conduit into one flexibility plane symbiotically adds to the targeted improvement in the cutting precision by avoiding undefined jerks. At the same time a further improvement is provided by saving on conduit complexity.
(m) A computer control for effecting coordinated operation of said first to fourth drive means to move said machining tool in X, Y, Z and U axes and for effecting computer controlled rapid operation of said cutting head and nozzle respectively along a trajectory to precisely machine a work piece supported on said worktable;
(n) said computer control providing input means to allow for the input of the trajectory and calculating means for calculating the optimum minimized jerk movement of the nozzle and for respectively controlling said drives, wherein jerk minimized means at least a smooth movement by jerk minimization of the support, by minimization of the sum of all jerk values (first derivative of the acceleration with respect to time and determined as one value per discretization step) of along the trajectory.

It is to be noted that a computer control as such is part of almost every new machine. Hence the computer as such is part of the prior art however, the invention makes use of new process-thoughts - as mentioned already above in the sense that the computer program provides - as an integrated inventive element - that all movements of the cutting head at least in the X (U)-Y-plane are jerk minimized and hence together with the new mounting order of the machining tool mounting means and the restriction of bending directions of energy supplying conduits to the cutting head or nozzle respectively lead to an improved cutting head device with an improved cutting performance.

The control of the invention further and preferably provides that the generation of the feed-rate of the cutting head and the separation of this feed-rate into a feed-rate for the X-axis and one for the U-axis are two serial processes. The separation is based on a look-a-head task of the feed-rate of the cutting head. The look-a-head time is about 1 s, but may vary depending on the aimed jerk-minimization level and the length of the U axis.

The invention provides - for the above mentioned reasons - a new cutting head device which can be used to improve existing cutting machines of various cutting technologies with a cutting head moveable with more precision and/or more speed in order to improve the quality of the work piece and/or the machine-output. The improvements can be such implied on existing machines already in use (substitute the cutting head device in use), on machine types with different cutting head devices still in manufacture (substitute the existing cutting head device construction with the new one according to this invention) or on completely new designed cutting machines.

Further objects of the invention are met by further details or variants of the invention.

In one embodiment said support is a bridge member spaced above and extending transversely of said worktable; said bridge member being adapted to hold either a first machining tool mounting means according to claim 1 or another first machining tool mounting means with another second machining tool mounting means but no third machining tool mounting means, wherein said another second machining tool carries said nozzle.

This makes clear that for this improved invention the Z-axis is not the last axis to move the nozzle. Even if the bridge member would hold different machining tool mounting means as defined in claim 1 the novelty and inventive step is defined by a none use of a Z-axis drive as that drive which directly moves the cutting head and nozzle respectively.

As the device of claim 1 also such device is advantageous because the weight and inertia of the z-drive and respective mounting means does not influence the rapid U-axis movements.

In another embodiment the flexibility plane is parallel to said U axis and said X axis, and wherein preferably said flexibility plane is also perpendicular to said worktable.

This embodiment has in addition to the advantages of the embodiments of claim 1 and 2 the advantage to make coordination of the moves of the different drives easy and standardized. However for special solutions either the angle of the flexibility plane might be different and/or the axes U and X may be oblique with respect to each other.

In a further embodiment said transport conduit for guiding the energy cutting ray and/or jet stream from the ray and/or jet source to said nozzle comprises a bow element with a minimized radius and a blocked flexibility in order to guide said energy cutting ray and/or jet stream out of the flexible part of the conduit into the nozzle.

This brings the advantage, that those parts of the conduit which needs flexibility for allowing the free movement of the cutting head have the respective movement and those parts which do not have this need are stiff and without wear and at the smallest possible special size.

The flexibility of the conduit in the flexibility plane may even help to compensate for jerks created in the same direction of the flexibility plane as the conduit may act as dampening means due to the energy which is consumed by its movement.

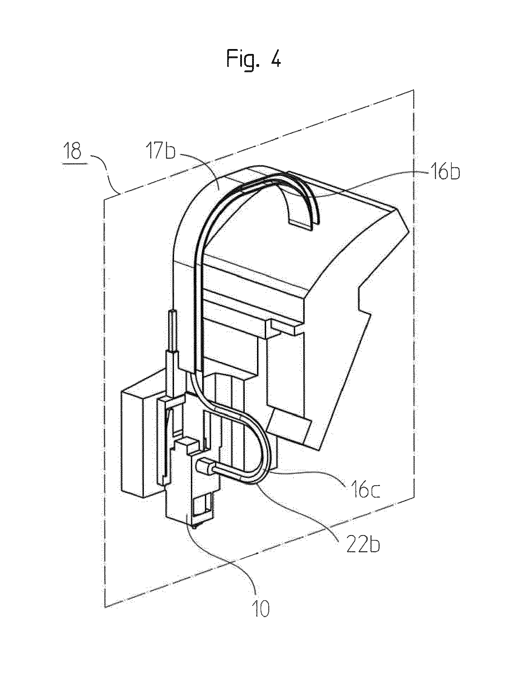

In a further embodiment said bow element lies in the said flexibility plane. This has the advantage of bending the conduit here in a single plane, whereas in a variant to this, said bow element lies perpendicular to said flexibility plane (Fig.4) with the advantage to use less space for the conduit in the X-direction, which in turn may help to reduce the foot print of the cutting head device.

In a further economic embodiment said fourth drive (15) has the same dynamic or alternatively a better dynamic than the second drive (13).

However it is possible also to use the same dynamic for the Y- and U-axes.Dynamic means the drive force F. The invention helds: Fy/my = Fu/mu = ahead (ahead is the acceleration of the cutting head relative to the work piece, m are the masses). Nevertheless axis U may accelerate faster than Fu/mu (in view of the inferior axis) but it still helds that Fu/mu = ahead in relation to the work piece.

This case may happen when U und X accelerate in opposing directions.; The force F on the drive however equals the inertia force mu*ahead.

In a further embodiment said nozzle lies in said flexibility plane and said flexibility plane can be moved in Y-axis direction from a maximum left position to a maximum right position which left and right positions define the maximum Y-axis working range, which reduces the number of optical elements in case of a laser cutting head.

In an improved embodiment said nozzle and said flexibility plane respectively lie in a plane which is parallel but remote from a balancing plane , wherein said balancing plane is perpendicular to said working plane and holds the center of gravity (M) of the third machining tool mounting means, which helps to reduce wear and play.

In a further improved embodiment said third machine tool mounting means comprises a second outer boarder plane opposite of said first outer border plane with respect to said balancing plane, which in turn forms the inner border plane of a support slide which carries the third machine tool mounting means, wherein said support slide has a lower surface more distinct from said worktable than said nozzle in order to give room for a match of said third machine tool mounting means with work table elements, which allows for a better integration of the means and for optimization of the worktable size and hence maximize the work piece size in Y-direction.

One concrete use is given when said machining tool is a laser cutting head.

An alternative concrete use is given when said machining tool is a water jet cutting head.

The efficiency and precision is further improved, when the cutting head device gets additional frames to support the machine bed laterally. An optimum is found, when the distance between neighboring frames is about 50cm.

In a further improvement the cutting head device the bow elements have a minimum radius of 200mm and wherein preferably - the conduit is positioned in the outer radius of the conduit guidance means, or two conduits are installed above each other This allows for best integration of new inventive and known existing machine parts at a small space.

The drawings show various examples and details of the invention.
- Fig.1:: Presentation of the axes
- Fig.2-5:: Details of conduit guide variants of the invention
- Fig.6:: A side view of a cutting machine with the inventive cutting head device in two positions.
- Fig.7:: Center of Gravity details Z axis
- Fig.8a:: a front view of a cutting machines bed
- Fig.8b:: a front view of a cutting machines bed with fortified frames
- Fig.8c:: a side view of a cutting machines bed
- Fig.8d:: a single frame
- Fig.9:: a perspective view of a cutting machines bed with fortified frames
- Fig.10:: a conduit tray behind the Y-axis.
- Fig. 10a: a detail of Fig.10
- Fig. 10b: the same detail of Fig.10 but with two conduits stacked above each other in a similar construction as shown in Fig.10
- Fig. 11:: the center of gravity details of the U axis
- Fig. 12:: the inventive control workflow versus the workflow of prior art machines (stroke out)

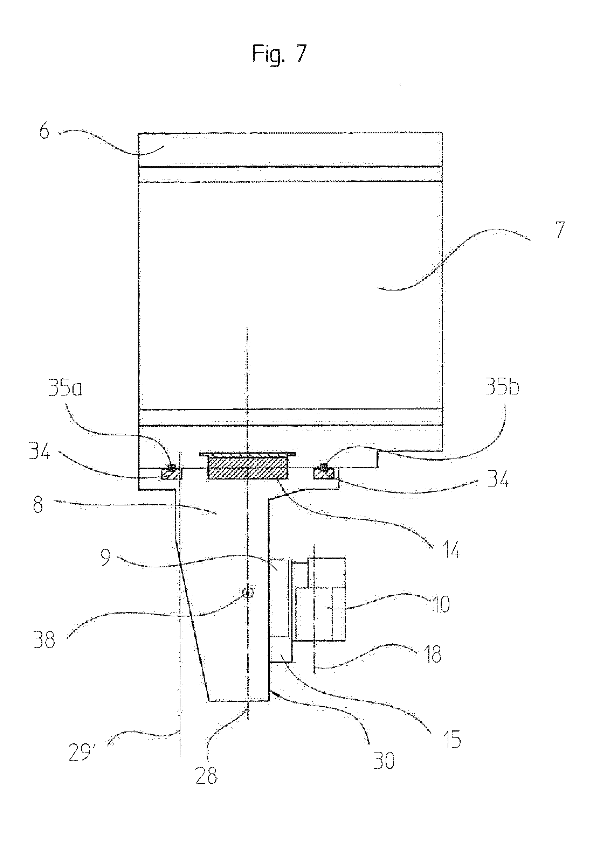

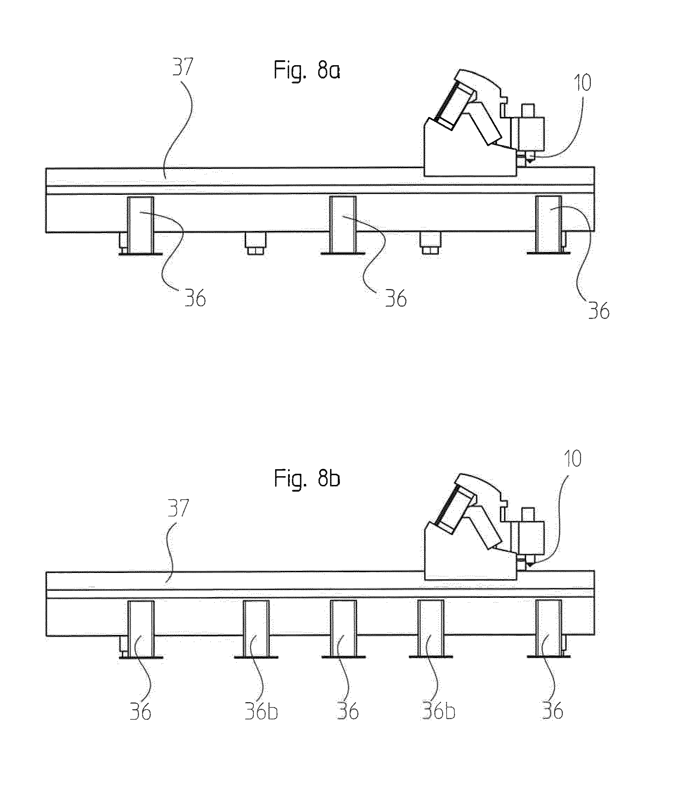

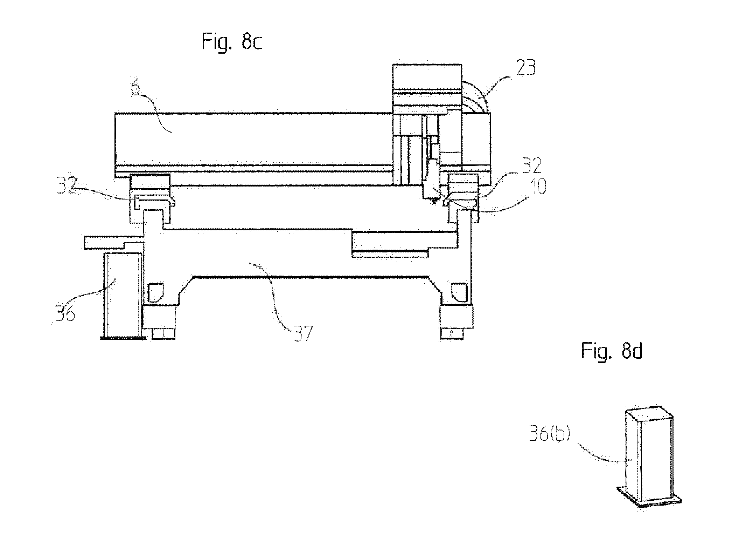

This application contains two additional figures which are incorporated by reference only and together with their respective explaination in the specification: Fig.7 and Fig. 8 of the EP1366846B1. Fig.7 is to show the symbolic system of the axis (X and Y1 are Y and X in this application and Y2 equals U in this application. (12) points to the bridge 6 and (46) points to the third machining tool mounting means 9 in this application.

Fig.8 shows a typical work piece (62), where arrows indicate working ranges of the U-axis which is used exclusively (together with the Y-axis) to cut the respective contours which fit in the work range according to the prior art. However the invention does not provide such exclusive movement of the U-axis at such work piece, as the X-axis (the bridge 6) would be moved as well at a jerk minimized speed and acceleration.

### DETAILED DESCRIPTION OF THE ILLUSTRATED EMBODIMENTS

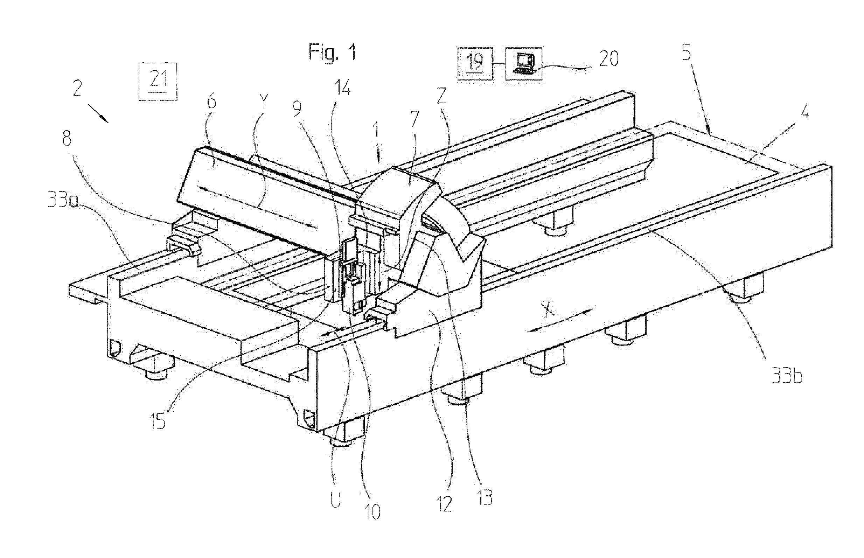

As seen in Figure 1, a machining tool embodying the present invention namely a cutting head device 1 is generally designated by the numeral 2. It provides a support 6 which functions as a bridge, which is supported on side rails 33a, 33b for movement over a work piece 4 (which is marked in dotted lines, as the work piece 4 may vary in size and kind and over a worktable 5 or bed (not shown in all details and hence also marked with dotted lines). The bridge 6 is moveable on the side rails 33a, 33b in the X-axis direction by a first drive means 12. Said first drive means are not shown in details, as they can be of any kind of motor or drive means which are used in the art of machine engineering. Typically it would be an electromagnetic linear motor drive or an electrical motor. A first machining tool mounting means 7 is movable along the bridge 6 in the Y-axis direction by a second drive means 13 Said second drive means are not shown in details, as they can be of any kind of motor or drive means which are used in the art of machine engineering. Typically it would be an electromagnetic linear motor drive or an electrical motor of similar kinds as the first drive means. An additional third drive means 14 and a fourth drive means 15 effect movement of a second machining tool mounting means 8 und a third machining tool mounting means 9 and a cutting head 10 and a nozzle 11 respectively in the Z-axis (vertically) and in the U-axis, as will be discussed more fully hereinafter. It is confirmed that this way and order of mounting means differs significantly from the closest prior art, as there - according to Fig.1 of the EP1366846B1 the motor (22) for the Z-axis is carried by a mounting means (10) which is moved in (Y-axis) = U-axis of the invention by a motor (20). In other words: In the invention the Z-axis supports the U-axis, which is done the other way round in the closest prior art. However the inventive concept, which aims for improving quality and speed of cutting operations take advantage of the fact, that by the new order of axis and mounting means the weight of the masses which have to be moved in the U- direction (which is the same as the X-direction = Y direction of the closest prior art) is minimized. For that reason jerks are reduced or minimized if the same operation speed of the U-axis is chosen. At higher operation speeds the machine output is increased.

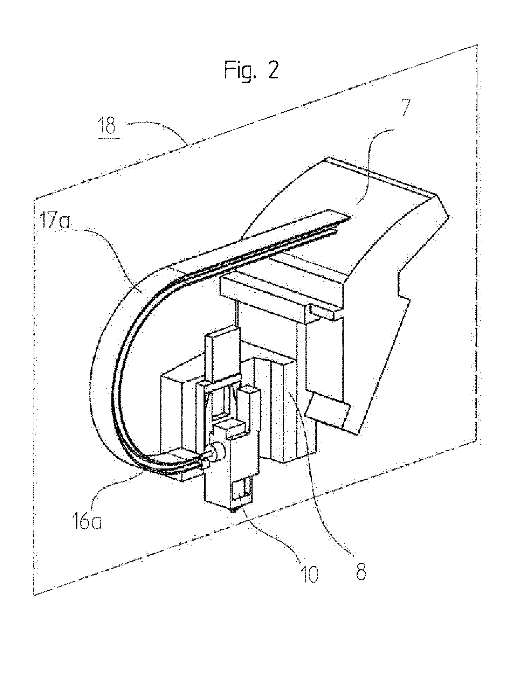

As just a symbol a ray or jet source 21 (typically a laser source or a water jet source or a gas source or the like) is shown and connected to the cutting head 10 by known means (not shown). Only in the vicinity of the cutting head, the inventions goes new ways in order to reduce problems of prior art which hindered an increase of operation speed and/or cutting quality, as will be explained again later with regard to Fig.2-5.

Further just as symbols a computer control 19 and an input means 20 are shown which are also connected to the drive means 12-15 by known means in the art. (see e.g. Fig. 1 of the EP1366846B1).

The way how the bridge 6 carries the first machining tool mounting means might be similar as shown in Fig. 2 to 6 of the EP1366846B1 or of any other known construction in the art. For that reason the following description refers also to elements shown in the prior art. Fig.2 to 6 and the respective description is incorporated by reference.

In case the invention is used together with a fiber laser system, a laser beam is transported to the cutting head 10 along the bridge 6 by a laser fiber referred to as a conduit 16. This transport fiber guides a laser beam as well known in the art. New however with respect to the art is, that in the invention the final part of the laser guiding fiber (the conduit 16) is guided by flexible transport conduit guiding means 17, which restrict the ability of the conduit 16 to bend in various directions, as provided for in the prior art. According to the invention the flexibility is reduced to a flexibility plane 18 which is perpendicular to the Y-axis and the work piece 4 or worktable 5 respectively.

The invention would be also very useful in combination with a diode laser. Sometimes companies refer to diode lasers with a transportation fiber also to fiber lasers - hence in the sense of the invention all kind of lasers are meant which have a fiber to guide the laser ray to the cutting spot.

Fig.2 to 5 show different variants of said final part of the laser guiding fiber 16 and guiding means 17 respectively.

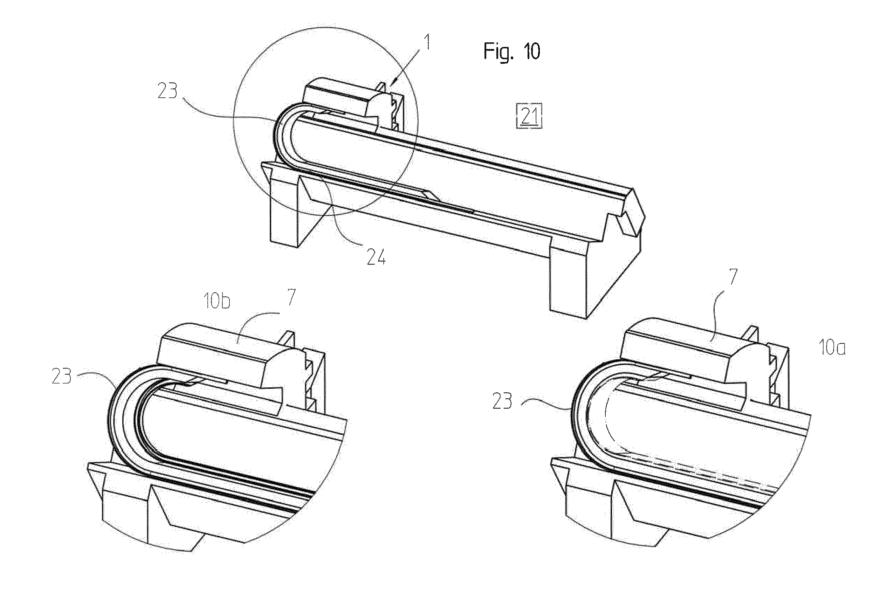

Fig 2 shows a simple construction, where the guiding means 17a offers a simple bow from the cutting head 10 upwardly to the bridge 6, into the vicinity of a support tray 24 above the bridge 6 (see Fig. 10) where a known further bow element (here not shown) leads the fiber 16a into the support tray 24 at the bridge 6 as shown in Fig.10. The guiding means 17a is flexible only in said plane 18 and allows hence the movement of the cutting head 10 in said plane 18 in directions of the U-and Z axes.

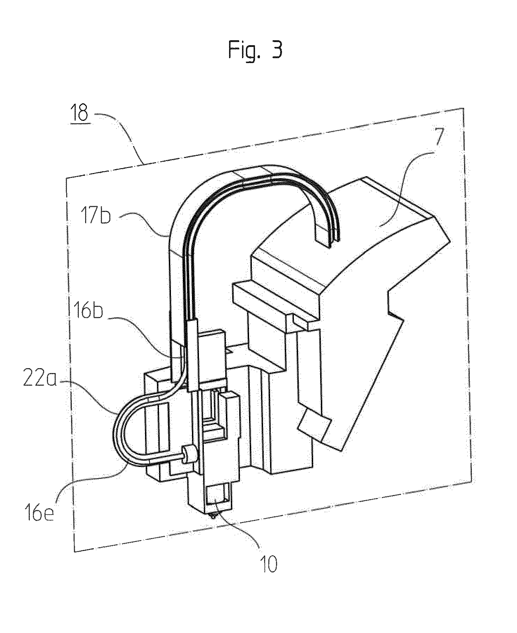

Fig.3 show a variant where the conduit 16b is guided in a guiding means 17b which has two bows in order to guide the conduit 16b into the tray 24 from above. Further this variant provides a fixed - non flexible bow element 22a where the conduit 16e is bent in its minimum radius so as to provide a horizontal entrance of the laser ray into the cutting head 10. This variant avoid flexible bending of the conduit 16 in the front region of the cutting head 10. That brings the advantage that the front area of the cutting head 10 uses always only the same space, whereas the variant of Fig.2 e.g. may vary in the spatial use of the front area of the cutting head. A known second bow element 23 guides the conduit 16b into the support tray 24.

Fig.4 shows a variant of the construction of Fig.3 , which minimizes the space used in front of the cutting head 10 by lying the bow 22b of the conduit 16c in a plane perpendicular to said flexibility plane parallel. The beam however being delivered still horizontally to the cutting head 10.

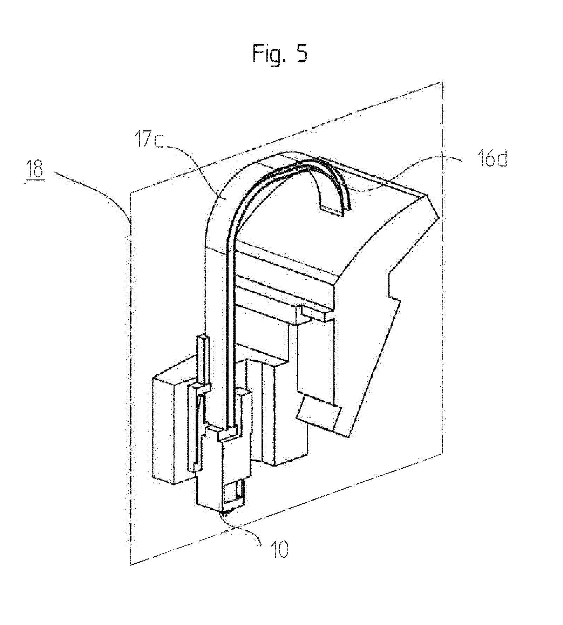

Fig.5 shows a variant to the constructions of Fig. 3 and 4 by eliminating the bows 22 and guiding the conduit 16d in line with the nozzle of the cutting head 10.

All the above variants have been described for a fiber laser. However it will be appreciated that all these inventive solutions which lead to more work precision and less jerk related problems at the cutting head device hold as well if the conduit is just for providing a gas stream either for laser cutting or for gas torch cutting or for providing a jet stream of water or similar fluids or for particle streams or any other form of cutting rays.

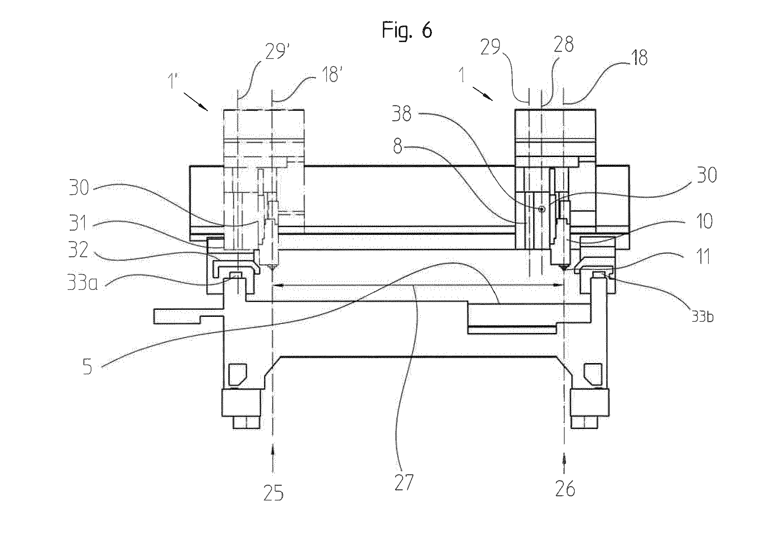

Fig.6 shows the device of Fig.1 in a side view. The cutting head device 1 is shown in two positions 1' (maximum left position 25) depicts the leftmost position and 1 (maximum right position 26) depicts the rightmost position. It will be appreciated that the cutting head 10 and the nozzle 11 respectively may span a working range 27 in Y-direction, which covers all of the worktable 5 width because the lower surface 31 of a support slide 30 is above the worktable elements namely the cover and the rail 33a which is supported by the elements 37 and 36 (fig.8c).

Fig.7 shows a cutout of the bridge 6 with the second machining tool mounting means 8 and the third drive means 14 responsible for movement of the cutting head 10 in the Z-axis.

The cutting head 10 is slidably mounted on the support slide 30 which allows its rapid movement in the U-axis. The support slide 30 is connected to the fourth drive means 15 which is part of the third machining tool mounting means 9. Said means 9 provides a balancing plane 28 which is that plane around which the weights of the third machining tool mounting means 9 are balanced including the support slide 30 and the cutting head 10. The technical idea behind this is that the center of gravity 38 of the mounting means 9 is relevant for the movement in z-direction. The center of gravity 38 lies on a balancing plane 28 which is just between the guide rails 35a and 35b. This reduces wear in the guide rails helps to reduce necessary drive power and vertical slide means 34.

Said third drive means 14 is equally positioned such, that it is in the middle of a vertical slide means 34 and guide rails 35a and 35b.This preferred positioning of the third drive means 14 and third machining tool mounting means 9 allows for minimized inertial and frictional cross-talk (ISO/TR 230-8:2010) during Z-axis movements and equally reduces jerk effects in Y- and U (X) - directions.

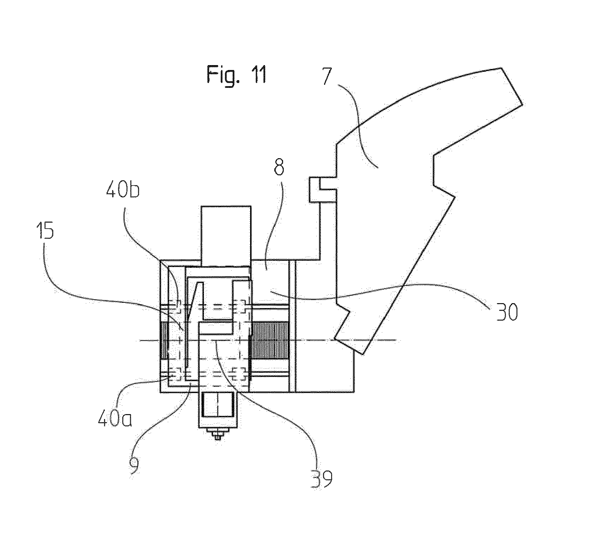

The balancing plane 39is similar to the balancing plane 28 in Fig.7 positioned best possible in the center of the drive and the rails 40a,b of the U axis. The center of gravity of the head 10 preferably lies also in this plane 39. See Fig.11.

This preferred positioning allows for minimized inertial and frictional cross-talk (ISO/TR 230-8:2010) during U-axis movements and equally reduces jerk effects in Z- and Y - directions.

Hence the nozzle 11 and the cutting ray or jet will not by irritated.

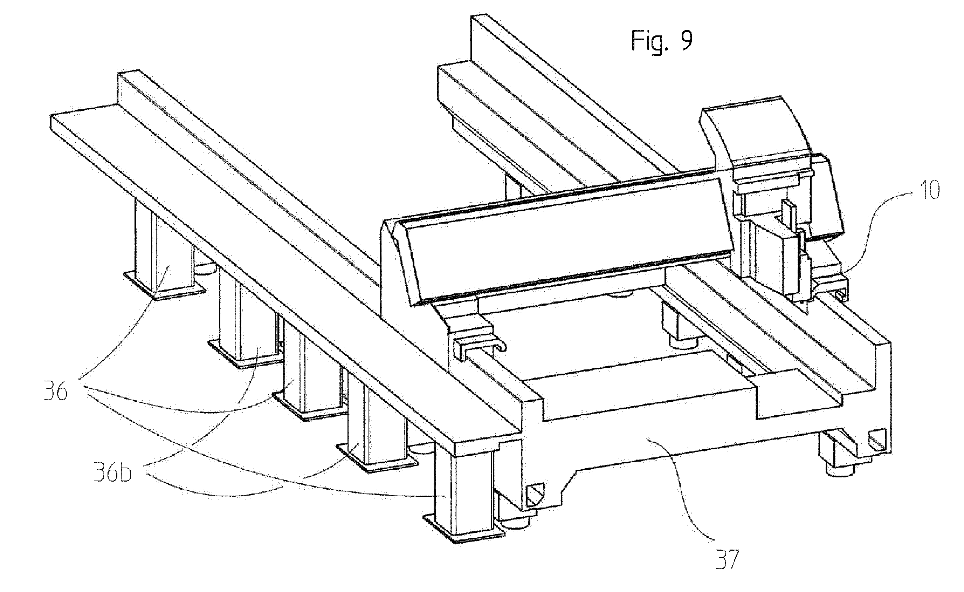

Figs. 8a to 8d and 9 show variants and details of the preferred machine bed construction supporting the invention. Said construction assists the aims of the invention namely to increase working speed and improve work precision.

The detail of Fig.8d depicts a support frame 36 which stiffens the machine bed 37.

As it is shown in Fig.8c said frame 36 supports the machine bed 37 in its Y-direction and reduces for that reason micro movements of the side bars of the machine bed 37 which carry the rails 33a and 33b. This in turn improves work precision at higher speed in Y-direction.

Fig. 8b shows a variant to Fig.8a in which two additional frames 36b support the machine bed 37. That brings the distance between such frames 36 along the machine bed 37 to about 50cm, which was found an optimum. Machines with less speed and precision requirements may have such a distance to about 100cm - as shown in Fig.8a.

Fig.9 depicts the variant of Fig.8b in a perspective side view.

In a particular preferred variant the frames 36 are mounted only on one side of the machine bed 37.

In operation of the cutting head device 1, the computer control 19 is programmed to operate the drive means 12-15 to produce the desired motion of the laser cutting head 10 relative to the work piece 4. As in conventional laser cutting machines, the drive 12 moves the bridge 6 in the X-axis direction, and the drive 13 moves the machining tool assembly in the Y-axis direction. The drive 14 does not move the cutting head 10 directly as in the closest prior art but only indirectly by moving the third machining tool mounting means 9 vertically (Z-axis) to adapt the cutting head relative to the thickness and flatness of the work piece 4.

The computer control 19 can also activate the fourth drive means 15 to move the cutting head 10 in the U-axis (=X axis) relative to the bridge 6. In the closest prior art, when only small X-Y-axis motion for the cutting action of a particular contour was required, that motion would have been be effected by the relative movement of only the U-axis and Y-axis. Certainly that motion is faster due to the smaller inertia of the cutting head 10 alone compared to the large inertia of the entire bridge 6. Because there is less mass to be moved, movement of the small axis U tended in the opinion of the man skilled in the prior art to provide better quality cutting action for intricate contours. However here the invention provides a completely different view: A work piece 4 consists normally of various different contours to be cut. They cannot be cut only by the small U-axis. For that reason in the closest prior art a stop and go movement of the large X-axis was provided. However the invention provides here that such movements are always made together (X- and U-axes) in a jerk minimized way. This is the function of the program in the computer control 19. Hence the invention provides that if a large or small displacements along the X-axis (U-axis) are required to reposition the laser cutting head 10 relative to the work piece, that means if the length of the cut exceeds the range of motion of the small U-axis or if it does not exceed said length for a particular local contour, the computer control 19 will always activate the drive 12 to move the bridge 6 - eventually together with the drive 15 to move the cutting head 10 in the same or in the opposite direction in order to perform a cut with jerk minimization, as the case may be. Hence during cutting the drive 12 will be always in motion in most of the instances. A resting bridge 6 or a stop and go motion of the bridge 6 is not foreseen by the invention.

### [Fig. 10]

The conduit 16 is positioned in the outer radius of the conduit guidance means 17 , or two conduits are installed above each other (Fig.10b).

Turning now to Figure 8 of the incorporated closest prior art, therein illustrated is a workpiece (62) on which are laid out (23) cutout parts configurations which are identified by numerals (1-9) either individually or in groups as shown by dotted line. The arrows indicate the range of travel of the small axis housing, relative to the transverse axis housing (28). As can be seen, the cutouts of (1-5, 7 and 9) can be effected in the closest prior art by using the Y-axis motion (U-axis of the invention) only the small axis housing (30). This is not provided for in the invention, where said cutouts would be made already by movement of both axes X and U. The cutouts 6 and 8 exceed the length of travel of the small axis U and require use of the bridge drive 12 either for the entire motion in the X-axis or together with the U-axis. A repositioning and stop of the bridge 6 for further cutting by movement of the small axis U is not provided by the invention, as such stops normally would not allow for jerk minimization.

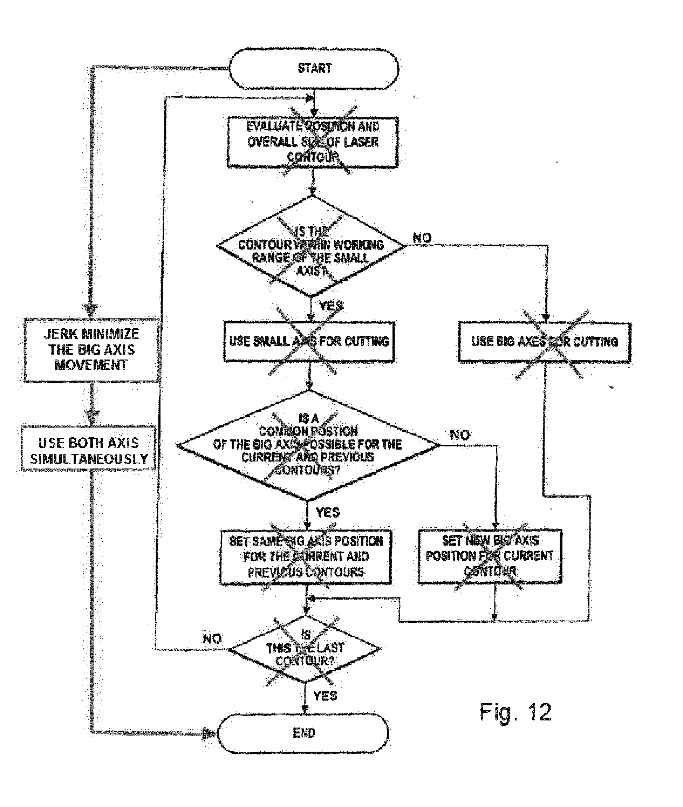

Fig. 12 shows the contrast to the control workflow compared to Figure 9 of the Patent EP1366846B1. The invented control does no qualification of the contour, neither all the other decision have to be made. Based on a look-a-head on a look-a-head task of the feed-rate of the cutting head the X- and U- axis are moved simultaneously.

The entire machining tool assembly can be enclosed in a protective housing if so desired. The power supply cables for the several drives are generally supported on a support tray 24 which can be better seen from Fig.10 so that the cutting head device 1 can move back and forth along the length of the bridge 6 (Y-direction). The same is true with respect to tubing for supplying cutting or shielding gas to the (laser) cutting head 10.

It will be readily appreciated that the combination and new positioning of the machining tool mounting means 7 to 9 and the respective drive means 12 to 15 afford significant advantages in time for operation, quality of cutting action and wear on the larger and more expensive machine parts. This holds true especially also for the different positioning of the Z-axis with respect to the U-axis as compared with the closest prior art. The bridge 6 is typically a substantial structure requiring a relatively powerful drive 12 to effect its motion along the length of the worktable 5. In contrast, a small housing containing the laser cutting head 10 can be relatively light and can be moved very quickly with relatively little inertia to be overcome. As a result, the laser cutting action afforded by movement of the small axis U is more precise especially when it moves together with a jerk minimized movement of the bridge 6, particularly when there is change in direction. The computer control software can easily manage the cutting procedure and synchronize the motion in both X- and/or U- and Y-axes and the superposition of the two motions possible in the Z-axis in order to best process the workpiece.

In a commercial embodiment of the present invention, the range of motion of the small axis housing is 100 mm, but longer or shorter ranges may be readily provided. The range influences together with the dynamic and the accepted amount of jerk (excitation) of the X-axis the resulting dynamic at the cutting head. A shorter range with similar accepted excitation of the X- axis reduces the possible dynamic at the cutting head. On the other hand a longer range means more mass to be moved by the Y-axis. This again causes more machine excitation, demands for more acceleration force, a more robust machine structure and is cost intensive.

### Numeral list

Most of the elements are shown symbolic as the man skilled in the art knows of diverse variants and details
- 1: cutting head device
- 2: machine tool
- 3: cutting head
- 4: work piece
- 5: worktable
- 6: support (bridge)
- 7: first machining tool mounting means
- 8: second machining tool mounting means
- 9: third machining tool mounting means slidable held on the second machining tool mounting means 8
- 10: cutting head
- 11: nozzle
- 12: first drive means
- 13: second drive means
- 14: third drive means
- 15: fourth drive means
- 16: a,b,c,d, flexible transport conduit
- 17: a,b,c, flexible transport conduit guiding means
- 18: flexibility plane
- 19: computer Control
- 20: input means
- 21: ray or jet source
- 22: a,b bow element
- 23: second bow element; cable carrier
- 24: support tray for conduit 16
- 25: maximum left position
- 26: maximum right position
- 27: working range in Y-axis direction
- 28: balancing plane
- 29: outer boarder plane
- 30: support slide 30 for holding cutting head 10
- 31: lower surface
- 32: protective bellow as normally used with laser cutting machines shown cut off as a symbol
- 33: a,b side rails to support the bridge 6
- 34: vertical slide means
- 35: a,b guide rails for cooperation with the vertical slide means 34
- 36: support frame
- 37: machine bed
- 38: center of gravity for second machining tool holding means 8
- 39: balancing plane with center of gravity for head 10
- 40: a,b linear-guide in U/X-direction for third machining tool holding means 9

## Claims

1. A cutting head device (1) for a machine tool (2) for machining work pieces by motion of the cutting head (3) relative to the work piece (4) comprising:
(a) a worktable (5) having X and Y axes and adapted to support a work piece (4) thereon;
(b) a support (6) extending transversely above said worktable (5) in the Y-axis and movable along the X-axis of said worktable;
(c) first machining tool mounting means (7) mountable movably or moveably mounted on said support (6) for movement along said support (6) in said Y-axis;
(d) second machining tool mounting means (8) movably mounted on said first machining tool mounting means (7) for movement in a Z-axis relative to said support (6) and relative to said second machining tool mounting means (8)
(e) third machining tool mounting means (9) moveably mounted on said second machining tool mounting means (8) for movement in an U-axis (= parallel to said X-axis) relative to said second machining tool mounting means (8) and said support (6) respectively ; said movement in the U-axis has a shorter maximum range than the maximum range of the support (6) in the X-axis;
(f) a cutting head (10) mounted on said third machining tool mounting means (9) and comprising a nozzle (11) for an energy cutting ray and/or jet stream;
(g) first drive means (12) for said support (6) to move said support (6) in said X-axis over said worktable (5);
(h) second drive means (13) for said first machining tool mounting means (7) to move said first machining tool mounting means (7) in said Y-axis along said support (6);
(i) third drive means (14) for moving said second machining tool mounting means (8) in said Z-axis relative to said first machining tool mounting means (7);
(j) fourth drive (15) means for moving said third machining tool mounting means (9) in said U-axis relative to said second machining tool mounting means (8);
(k) wherein said four drive means (12,13,14,15) are of such dimensions, that the first drive means (12) allows for relatively slow constant and jerk minimized movement of said support (6) in said X-axis and the second drive means (13) allows for relatively fast (high dynamic) and preferably jerk minimized movement of said first machine tool mounting means (7) in said Y-axis and the third drive means (14) allows for relatively faster preferably jerk minimized movement of said second machine tool mounting means (8) in said Z-axis and the fourth drive means (15) allows for relatively fast (high dynamic) and preferably jerk minimized movement of said third machine tool mounting (14) means in said U-axis;
(l) a transport conduit (16) for guiding the energy cutting ray and/or jet stream from a ray and/or jet source (21) to said nozzle (11); said transport conduit (16) being guided in a flexible transport conduit guiding means (17), wherein the flexibility of said conduit guiding means (17) is restricted to a flexibility plane (18);
(m) a computer control (19) for effecting coordinated operation of said first to fourth drive means (12,13,14,15) to move said cutting head (10) in X, Y, Z and U axes and for effecting computer controlled rapid operation of said nozzle (11) along a trajectory to precisely machine a work piece (4) supported on said worktable (5);
(n) said computer control (19) providing input means to allow for the input of the trajectory details and calculating means for calculating the optimum jerk minimized movement of at least the X-axis and support (6) respectively and for respectively controlling said drives (12-15),
wherein "jerk minimized" means at least a smooth movement by jerk minimization of the support (6), by minimization of the sum of all jerk values whereby jerk values are the first derivative of the acceleration with respect to time and determined as one value per discretization step of the nozzle along the trajectory.

2. The cutting head device (1) in accordance with claim 1 wherein said support (6) is a bridge member spaced above and extending transversely of said worktable (5); said bridge member being adapted to directly hold either a first machining tool mounting means (7) according to claim 1 or a different first machining tool mounting means with a different second machining tool mounting means but not a third machining tool mounting means (9) for providing a cutter head movement in U-axis and wherein said another second machining tool mounting means carries said cutting head and nozzle respectively.

3. The cutting head device (1) in accordance with claim 1 or 2, wherein the flexibility plane (18) is parallel to said U axis and said X axis, and wherein preferably said flexibility plane (18) is also perpendicular to said worktable (5).

4. The cutting head device (1) in accordance with claim 1, 2 or 3, wherein said transport conduit (16b,c) for guiding the energy cutting ray and/or jet stream from the ray and/or jet source (21) to said nozzle (11) comprises a bow element (22b) with a minimized radius and a blocked flexibility in order to guide said energy cutting ray and/or jet stream out of the flexible part of the conduit (16b) into the nozzle (11).

5. The cutting head device (1) of claim 4 wherein said bow element (22a) lies in the said flexibility plane (18).

6. The cutting head device (1) in accordance with one of the previous claims wherein said fourth drive (15) has the same dynamic or alternatively a better dynamic than the second drive (13).

7. The cutting head device (1) in accordance with one of the previous claims wherein said nozzle (11) lies in said flexibility plane (18) and said flexibility plane (18) can be moved in Y-axis direction from a maximum left position (25) to a maximum right position (26) which left an and right positions (25,26) define the maximum Y-axis working range (27).

8. The cutting head device (1) in accordance with claim 8, wherein said nozzle (11) and said flexibility plane (18) respectively lie in a plane which is parallel but remote from a balancing plane (28), wherein said balancing plane is perpendicular to said working plane 5 and holds the center of gravity (38) of the third machining tool mounting means (8, wherein said balancing plane (28) is perpendicular to a further balancing plane (39 of the cutting head (10).

9. The cutting head device (1) in accordance with claim 9 wherein said third machine tool mounting means (9) comprises a outer boarder plane (29) opposite of said flexibility plane18 with respect to said balancing plane (28), which in turn forms the inner border plane of a support slide (30) which carries the cutting head (10), wherein said support slide (30) has a lower surface (31) more distinct from said worktable (5) than said nozzle (11) in order to give room for a match of said third machine tool mounting means (9) with work table elements (32 and 33).

10. The cutting head device in accordance with a previous claim wherein said cutting head device (1) is a laser cutting head device, preferably adapted to be installed on a fiber laser cutter to efficiently utilize laser cutting..

11. The cutting head device in accordance with a previous claim wherein said cutting head device (1) is a water jet cutting head device.

12. The cutting head device in accordance with a previous claim wherein to further improve the efficiency and precision of the cutting operation additional frames (36) are provided to support the machine bed (37) laterally.

13. The cutting head device of claim 13, wherein the distance between neighboring frames (36) is about 50cm, and or wherein said frames are only on one side of the machine bed.

14. The cutting head device in accordance with a previous claim wherein the bow elements (22) have a minimum radius of 200mm and wherein preferably - the conduit (16) is positioned in the outer radius of the conduit guidance means (17), or two conduits are installed above each other.

15. The cutting head device in accordance with a previous claim, wherein the algorithm of the program contains a worst case scenario in order to avoid iteration loops to verify that the trajectory is optimized (look ahead function).
